(19) Europäisches Patentamt
European Patent Office
Office européen des brevets

(11) EP 1 475 265 B1

(12) **EUROPÄISCHE PATENTSCHRIFT**

(45) Veröffentlichungstag und Bekanntmachung des Hinweises auf die Patenterteilung:
**24.01.2007 Patentblatt 2007/04**

(51) Int Cl.:
***B60W 10/02*** *(2006.01)* ***B60W 10/04*** *(2006.01)*
***B60W 10/10*** *(2006.01)* ***B60K 31/00*** *(2006.01)*

(21) Anmeldenummer: **04005543.6**

(22) Anmeldetag: **09.03.2004**

(54) **Verfahren zum Betreiben eines Fahrzeugs**

Method of operating a vehicle

Procédé de commande d’un véhicule

(84) Benannte Vertragsstaaten:
**DE FR IT**

(30) Priorität: **06.05.2003 DE 10320009**

(43) Veröffentlichungstag der Anmeldung:
**10.11.2004 Patentblatt 2004/46**

(73) Patentinhaber: **ROBERT BOSCH GMBH**
**70442 Stuttgart (DE)**

(72) Erfinder: **Kustosch, Mario**
**71665 Vaihingen/Enz (DE)**

(56) Entgegenhaltungen:
**DE-A1- 3 502 330** **DE-A1- 4 118 332**
**DE-A1- 19 849 583**

- **PATENT ABSTRACTS OF JAPAN Bd. 1995, Nr. 11, 26. Dezember 1995 (1995-12-26) -& JP 07 223457 A (FUJITSU TEN LTD), 22. August 1995 (1995-08-22)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 475 265 B1

## Beschreibung

Die Erfindung betrifft ein Verfahren zum Betreiben eines Fahrzeugs, insbesondere eines Fahrzeugs, das Antriebsräder, eine Brennkraftmaschine und ein in Wirkverbindung mit den Antriebsrädern und der Brennkraftmaschine bringbares Getriebe mit mindestens einer anwählbaren Getriebeuntersetzung aufweist.

Die Erfindung betrifft auch ein Steuergerät, insbesondere ein Steuergerät zum Steuern und/oder Regeln eines Fahrzeugs, wobei das Fahrzeug Antriebsräder, eine Brennkraftmaschine und ein in Wirkkontakt mit den Antriebsrädern und der Brennkraftmaschine bringbares Getriebe mit mindestens einer anwählbaren Getriebeuntersetzung aufweist und wobei die Brennkraftmaschine in einem Schubabschaltemodus betreibbar ist.

Die Erfindung betrifft ferner ein Fahrzeug, das Antriebsräder, eine Brennkraftmaschine und ein in Wirkkontakt mit den Antriebsrädern und der Brennkraftmaschine bringbares Getriebe mit mindestens einer wählbaren Getriebeuntersetzung aufweist, wobei die Brennkraftmaschine in einem Schubabschaltemodus betreibbar ist.

Die Erfindung betrifft außerdem ein Computerprogramm, das auf einem Steuergerät, insbesondere auf einem Mikroprozessor, ablauffähig ist.

Stand der Technik

Heute übliche Fahrzeuge weisen meist ein Getriebe auf, das es ermöglicht, ein Untersetzungsverhältnis derart zu erzeugen, dass eine Drehzahl der Brennkraftmaschine nicht direkt beispielsweise an eine Kardanwelle oder eine Antriebswelle übertragen wird. Damit ist es möglich, das durch die Drehbewegung der Brennkraftmaschine entstehende Drehmoment besonders gut bei verschiedenen Geschwindigkeitsbereichen zu nutzen. Bei einem manuell schaltbaren Fünfganggetriebe kann ein Untersetzungsverhältnis im 1. Gang beispielsweise ca. 3.4 und im 5. Gang ca. 0.8 betragen.

Es ist bekannt, eine Brennkraftmaschine in einem Fahrzeug in einem Schubabschaltemodus zu betreiben, um den Kraftstoffverbrauch des Fahrzeugs zu verringern. Dabei wird die Kraftstoffzufuhr zu der Brennkraftmaschine unterbrochen, solange eine Mindestdrehzahl überschritten ist und keine Vortriebsanforderung vorliegt. Eine Vortriebsanforderung, auch Leistungs- oder Drehmomentanforderung genannt, liegt beispielsweise vor, wenn ein Fahrer das Gaspedal eines Kraftfahrzeugs betätigt oder ein automatisches Geschwindigkeitsregelsystem (Cruise Control, bzw. Tempomat) ein entsprechendes Signal erzeugt. Beispielsweise erfolgt eine Schubabschaltung bei einer Bergabfahrt, während der der Fahrer das Gaspedal nicht betätigt, um eine Kraftstoffersparnis zu erreichen.

Wird die Brennkraftmaschine in dem Schubabschaltemodus betrieben, so kann aufgrund der Kompressionswiderstände der Brennkraftmaschine eine Bremswirkung des Fahrzeuges erreicht werden (sogenannte Motorbremse). Vorraussetzung dafür ist, dass eine kraftschlüssige Verbindung zwischen der Brennkraftmaschine und den Antriebsrädern hergestellt ist, beispielsweise dadurch, dass bei einem manuellen Wechselgetriebe der Fahrer einen bestimmten Gang eingelegt hat.

Üblicherweise erfolgt eine Schubabschaltung jedoch nur, falls die Drehzahl der Brennkraftmaschine einen vorgebbaren Schwellwert überschreitet. Damit ist zum einen gewährleistet, dass bei einer zu niedrigen Drehzahl kein "Ruckeln" dadurch bemerkbar ist, dass die einzelnen Kompressionsphasen der Brennkraftmaschine unterscheidbar werden. Der Schwellwert ist aber auch notwendig, um ein "Absterben" der Brennkraftmaschine für den Fall zu verhindern, dass die Wirkverbindung zwischen der Brennkraftmaschine und den Antriebsrädern beispielsweise durch Betätigen der Kupplung plötzlich unterbrochen wird. Dann nämlich muss die Brennkraftmaschine sich noch mit einer so hohen Drehzahl drehen, dass genügend Zeit bleibt, die Kraftstoffzufuhr wieder herzustellen und die Brennkraftmaschine in einen regulären Betrieb (Drehbewegung aufgrund der bei der Verbrennung des Kraftstoffs freigesetzten Energie) überführen zu können.

Der Schubabschaltemodus wird beispielsweise beendet, wenn die Drehzahl der Brennkraftmaschine unter den Schwellwert fällt, wieder eine Vortriebsanforderung vorliegt oder wenn die Wirkverbindung zwischen der Brennkraftmaschine und den Antriebsrädern beispielsweise durch Betätigen einer Kupplung (bei einem manuell schaltbaren Stufengetriebe) oder durch Anwählen der Stellung "N" (bei einem automatischen Getriebe) unterbrochen wird.

Vom Markt her ist es, insbesondere in Verbindung mit einem automatischen oder automatisierten Stufengetriebe, auch bekannt, in einem Fahrzeug einen niedrigeren Gang, bzw. ein höheres Untersetzungsverhältnis, automatisch anzuwählen, falls die Drehzahl unter den Schwellwert fällt und die Brennkraftmaschine in dem Schubabschaltemodus betrieben wird.

Dadurch wird jedoch häufig eine zu starke Bremswirkung erreicht, beispielsweise dann, wenn ein Fahrer auf ein Zielobjekt wie eine Kreuzung oder eine rote Ampel zurollen möchte. In diesen Fällen muss ein Fahrer dann beispielsweise das Gaspedal betätigen, um einen Betrieb der Brennkraftmaschine in dem Schubabschaltemodus und damit eine zu starkes Abbremsen des Fahrzeugs zu verhindern. Dadurch wird jedoch eine Erhöhung des Kraftstoffverbrauches bewirkt.

Die Schrift DE 19849583 A offenbart ein Verfahren, wobei fogende Schritte ausgeführt werden:

- Ermitteln eines Zielobjekts.
- Ermitteln einer ersten Entfernung des Fahrzeugs zu dem Zielobjekt.
- Ermitteln einer Getriebeuntersetzung, so dass die Brennkraftmaschine in dem Schubabschaltemodus betrieben wird.

Aufgabe der Erfindung ist es, eine Möglichkeit bereitzustellen, um ein Fahrzeug besonders kraftstoffsparend betreiben zu können.

Die Aufgabe wird mit einem Verfahren der eingangs genannten Art dadurch gelöst, dass die folgenden Schritte, ausgeführt werden:

- Ermitteln eines Zielobjekts;
- Ermitteln einer ersten Entfernung des Fahrzeugs zu dem Zielpunkt;
- Ermitteln einer Reichweite des Fahrzeugs unter der Annahme, dass keine Wirkverbindung zwischen der Brennkraftmaschine und den Antriebsrädern besteht;
- Ermitteln einer zweiten Entfernung in Abhängigkeit der ersten Entfernung und eines vorgebbaren
- Toleranzbereichs, so dass die Summe aus der zweiten Entfernung dem Toleranzbereich die erste Entfernung nicht übersteigt; und
- Ermitteln einer Getriebeuntersetzung, so dass die Brennkraftmaschine in dem Schubabschaltemodus betrieben werden kann, falls die Getriebeuntersetzung in Wirkverbindung mit den Antriebsrädern und der Brennkraftmaschine gebracht wird.
- Falls die ermittelte Reichweite größer ist als die Summe aus der zweiten Entfernung und des Toleranzbereichs: Sicherstellen, dass die Getriebeuntersetzung sich in Wirkverbindung mit den Antriebsrädern und der Brennkraftmaschine befindet

Vorteile der Erfindung

In einem modernen Fahrzeug stehen beispielsweise mittels eines automatisch anpassbaren Geschwindigkeitsregelsystems (Adaptive Cruise Control, ACC) Informationen über herannahende Zielobjekte zur Verfügung. Zum Erfassen dieser Informationen werden beispielsweise Radarsensoren oder Lasersensoren eingesetzt. Außerdem verfügen moderne Fahrzeuge über Navigationssysteme, die Informationen über die Verkehrsführung, zum Beispiel Kreuzungen und Ampeln, erfassen.

Durch geeignete Auswertung dieser Informationen können sogenannte Zielobjekte erkannt werden, die ein Verringern einer aktuellen Geschwindigkeit des Fahrzeugs erfordern. Ein Zielobjekt ist beispielsweise eine rote Ampel, eine Kreuzung oder das Ende eines Staus.

In dem erfindungsgemäßen Verfahren wird für ein erfasstes Zielobjekt eine erste Entfernung ermittelt. Diese Entfernung entspricht der Strecke, die das Fahrzeug zurücklegen muss, um das Zielobjekt zu erreichen. Des weiteren wird eine zweite Entfernung ermittelt. Dabei gilt stets, dass die Summe aus der zweiten Entfernung und einem vorgebbaren Toleranzbereich kleiner oder gleich der ersten Entfernung ist. Durch diese zweite Entfernung wird ein sogenannter Zielpunkt festgelegt, der zwischen dem Fahrzeug und dem Zielobjekt gelegen ist und dessen Abstand zu dem Fahrzeug genau der zweiten Entfernung entspricht. Der Zielpunkt ist so gewählt, dass das Fahrzeug bei der Annäherung an das Zielobjekt diesen Zielpunkt erreichen und dort halten soll. Damit wird sichergestellt, dass das Fahrzeug nicht mit dem Zielobjekt kollidiert. Es ist vorgesehen, dass das Fahrzeug den Zielpunkt maximal um den vorgebbaren Toleranzbereich überschreiten kann. Selbstverständlich ist der Toleranzbereich so gewählt, dass keine Kollision mit dem Zielobjekt stattfinden kann. Vorzugsweise ist der Toleranzbereich außerdem so gewählt, dass bestimmte Einflüsse, wie eine Steigung der Fahrbahn oder eine Beschaffenheit der Fahrbahnoberfläche nicht verhindern können, dass das Fahrzeug den Zielpunkt erreicht.

Bei dem erfindungsgemäßen Verfahren wird auch die Reichweite des Fahrzeugs ermittelt. Darunter ist die Strecke zu verstehen, die das Fahrzeug "rollend", also bei Unterbrechung der Wirkverbindung zwischen der Brennkraftmaschine und den Antriebsrädern, (beispielsweise durch Auskuppeln) zurücklegen würde.

Überschreitet die Reichweite die Summe aus der ersten Entfernung des vorgebbaren Toleranzbereiches, so muss das Fahrzeug abgebremst werden, um eine Kollision zu vermeiden. Dabei wird der vorgebbare Toleranzbereich derart bestimmt, dass Einflüsse, über die keine konkreten Information vorliegen, wie kleinere Steigungen oder die Art des Straßenbelages, kompensiert werden können.

Um Kraftstoff einzusparen, wird die Brennkraftmaschine in dem Schubabschaltemodus betrieben, was eine Abbremsung des Fahrzeugs mittels der Motorbremse zur Folge hat. Dazu wird erfindungsgemäß ein Untersetzungsverhältnis des Getriebes in Abhängigkeit der aktuellen Geschwindigkeit des Fahrzeugs derart ermittelt, dass die Brennkraftmaschine in dem Schubabschaltemodus betrieben werden kann, sobald dieses Untersetzungsverhältnis angewählt wird. Dazu wird sichergestellt, dass sich das ermittelte Untersetzungsverhältnis des Getriebes in Wirkverbindung mit der Brennkraftmaschine und den Antriebsrädern befindet. Gegebenenfalls wird dabei diese Wirkverbindung hergestellt.

Damit ist eine besonders kraftstoffsparende Annäherung des Fahrzeugs an das erfasste Zielobjekt möglich, wenn die ermittelte Getriebeuntersetzung oder ein dadurch ausgewählter Gang, in Wirkverbindung zwischen die Brennkraftmaschine und die Antriebsräder gebracht ist.

Mittels des erfindungsgemäßen Verfahren wird eine Energievergeudung vermieden, da das Fahrzeug bei Erkennen eines Zielobjekts nun nicht zuerst in ausgekuppeltem Zustand auf das Zielobjekt zurollt und anschließend mit der herkömmlichen Bremse abgebremst und schließlich zum Stillstand gebracht wird.

In einer vorteilhaften Weiterbildung des Verfahrens wird die zweite Entfernung zusätzlich in Abhängigkeit eines vorgebbaren Sicherheitsabstands ermittelt, so dass die Summe aus der zweiten Entfernung und dem Sicherheitsabstand gleich der ersten Entfernung ist. Dadurch ist insbesondere sichergestellt, dass der Toleranzbereich stets kleiner oder gleich dem Sicherheitsabstand ist, wodurch besonders gut die eine Kollision des Fahrzeugs mit dem Zielobjekt vermieden werden kann.

Vorzugsweise wird eine Drehzahl erfasst, das Vorliegen einer Vortriebsanforderurg geprüft und die Brennkraftmaschine in einem Schubabschaltemodus betrieben, falls keine Vortriebsanforderung vorliegt und die Drehzahl einen vorgebbaren ersten Schwellwert überschreitet. Dabei stellt der erste Schwellwert eine Mindestdrehzahl dar, die so gewählt ist, dass kein "unrunder" Lauf der Brennkraftmaschine auftritt und kein Absterben der Brennkraftmaschine erfolgt, falls während eines Betriebes der Brennkraftmaschine in dem Schubabschaltemodus die Wirkverbindung der Brennkraftmaschine zu den Antriebsräderung beispielsweise durch Auskuppeln unterbrochen wird. Es ist ferner zweckmäßig, nur dann in den Schubabschaltemodus zu schalten, wenn keine Vortriebsanforderung vorliegt, weil dieses beispielsweise von dem Fahrer als überraschend und störend empfunden werden würde.

Vorteilhafterweise wird die Bestimmung der Reichweite in Abhängigkeit einer Fahrzeugmasse, eines Luftwiderstandsbeiwertes, eines Massezuschlagsfaktors, der aktuellen Geschwindigkeit und/oder der aktuellen Beschleunigung des Fahrzeugs durchgeführt. Dabei ist der Luftwiderstandsbeiwert der sogenannte cw-Wert. Dabei dient der Massezuschlagsfaktor der Kompensation von rotatorischen Trägheiten, also Wiederständen, die sich durch die Kräfte von sich drehenden Massen ergeben. Mittels dieser Größen ist eine besonders genaue Bestimmung der Reichweite möglich.

In einer bevorzugten Ausführungsform der Erfindung wird die erste und/oder die zweite Entfernung in Abhängigkeit einer Geschwindigkeit des Zielobjekts ermittelt. Damit kann eine kraftstoffsparende Annäherung auch an ein sich bewegendes Zielobjekt, beispielsweise ein vor dem Fahrzeug herfahrendes anderes Fahrzeug, das mit geringerer Geschwindigkeit fährt, durchgeführt werden.

In einer vorteilhaften Weiterbildung der Erfindung, wobei das Getriebe mindestens zwei verschiedene Getriebeuntersetzungen aufweist, wird die niedrigste Getriebeuntersetzung ermittelt, bei der die Brennkraftmaschine in dem Schubabschaltemodus betrieben werden kann. Die Bremswirkung einer Brennkraftmaschine ist umso geringer, je geringer deren Drehzahl ist. Bei einer niedrigen Getriebeuntersetzung (entspricht der Anwahl eines "hohen" Ganges) ist die Drehzahl der Brennkraftmaschine im Verhältnis zu einer Geschwindigkeit des Fahrzeugs geringer, als bei einer hohen Getriebeuntersetzung (entspricht der Anwahl eines "kleinen" Ganges). Durch die Anwahl eines möglichst großen Ganges kann die Bremswirkung der Brennkraftmaschine reduziert werden. Dadurch wiederum kann das Fahrzeug länger in einem Schubabschaltemodus betrieben werden, was eine erhöhte Kraftstoffersparnis bedeutet.

In einer vorteilhaften Weiterbildung der Erfindung wird eine Getriebeuntersetzung derart ermittelt, dass die Drehzahl nicht größer als die Summe aus dem ersten Schwellwert und einem vorgebbaren ersten Offset-Wert wird, wenn die Getriebeuntersetzung in Wirkverbindung mit den Antriebsrädern und der Brennkraftmaschine gebracht wird. Ein Offset-Wert ist ein relativer Wert, der beispielsweise durch Summenbildung mit einem anderen Wert in Beziehung gesetzt wird. Ist dieser andere Wert ein absoluter Wert, so erhält man durch die Summenbildung wieder einen absoluten Wert. Durch die Summe aus dem ersten Schwellwert und dem vorgebbaren ersten Offset-Wert kann beispielsweise ein zweiter Schwellwert bestimmt werden. Dieser zweite Schwellwert ist damit ein absoluter Wert.

Die Bremswirkung einer Brennkraftmaschine im Schubabschaltebetrieb ist umso größer, je größer die Drehzahl der Brennkraftmaschine ist. Bei dieser Weiterbildung wird eine zu große Bremswirkung der Brennkraftmaschine verhindert, wodurch insgesamt zuviel Bewegungsenergie des Fahrzeugs verloren ginge. Somit kann es wirtschaftlicher sein, das Fahrzeug oberhalb dieses zweiten Schwellwertes zunächst "rollend", also beispielsweise mit ausgekuppeltem Getriebe, zu betreiben.

Vorzugsweise wird für eine ausgewählte Getriebeuntersetzung die Drehzahl überwacht und eine größere Getriebeuntersetzung ermittelt, falls die Drehzahl kleiner als die Summe aus dem ersten Schwellwert und einem vorgebbaren zweiten Offset-Wert ist. Durch die Summe aus dem ersten Schwellwert und dem vorgebbaren zweiten Offset-Wert kann beispielsweise ein dritter Schwellwert bestimmt werden

Bei dieser Ausführungsform eines erfindungsgemäßen Verfahrens wird gewährleistet, dass die Brennkraftmaschine eines Fahrzeugs, das sich an ein Zielobjekt annähert, möglichst lange in dem Schubabschaltemodus betrieben werden kann. Es wird beispielsweise bei einem automatischen Stufengetriebe immer der höchst mögliche Gang ermittelt, mit dem die Brennkraftmaschine in dem Schubabschaltemodus betrieben werden kann. Sinkt aufgrund der Bremswirkung der Brennkraftmaschine und verschiedener Reibungsverluste die Geschwindigkeit des Fahrzeugs, so reduziert sich auch die Drehzahl der Brennkraftmaschine, falls diese in Wirkverbindung mit den Antriebsrädern steht, also beispielsweise ein Gang eingelegt ist und die Kupplung nicht getrennt ist. Würde die Drehzahl der Brennkraftmaschine unter den ersten Schwellwert sinken, so wäre ein Betrieb der Brennkraftmaschine im Schubabschaltemodus nicht mehr möglich. Um weiterhin einen Betrieb der Brennkraftmaschine im Schubabschaltemodus zu gewährleisten, wird noch vor Erreichen des ersten Schwellwertes in kleinerer Gang ermittelt.

Während eines Gangwechsels ist die Wirkverbindung zwischen der Brennkraftmaschine und den Antriebsrädern getrennt. Wird die Brennkraftmaschine während dieser Zeit in einem Schubabschaltemodus betrieben, so reduziert sich während des Gangwechsels die Drehzahl der Brennkraftmaschine weiter. Der zweite Offset-Wert (und damit der dritte Schwellwert) ist deshalb so gewählt, dass in einen kleineren Gang, beispielsweise den nächst niedrigen Gang, gewechselt werden kann, ohne dass während des Wechsels die Drehzahl der Brennkraftmaschine unter den ersten Schwellwert fällt, so dass die Brennkraftmaschine kontinuierlich in dem Schubabschaltemodus betrieben werden kann.

In einer vorteilhaften Weiterbildung der Erfindung wird eine Getriebeuntersetzung derart ermittelt, dass die Drehzahl größer ist als die Summe aus dem ersten Schwellwert und einem vorgebbaren dritten Offset-Wert, wenn die Getriebeuntersetzung in Wirkverbindung mit den Antriebsrädern und der Brennkraftmaschine gebracht wird. Durch die Summe aus dem ersten Schwellwert und dem vorgebbaren dritten Offset-Wert kann beispielsweise ein vierter Schwellwert bestimmt werden. Dabei ist der dritte Offset-Wert so gewählt, dass nach dem Einlegen eines einer ermittelten Getriebeuntersetzung entsprechenden Ganges nicht innerhalb einer sehr kurzen Zeitspanne ein nächstkleinerer Gang ausgewählt werden muss, weil die Drehzahl innerhalb dieser sehr kurzen Zeitspanne unter die durch den dritten Schwellwert (entspricht der Summe aus erstem Schwellwert und zweitem Offset-Wert) bestimmte Drehzahl fällt, was einen erneuten Gangwechsel zur Folge hätte. Sehr kurz aufeinanderfolgenden Gangwechsel werden jedoch als unkomfortabel empfunden.

In einer bevorzugten Ausführungsform wird die Reichweite überwacht, die erste Entfernung und/oder die zweite Entfernung überwacht und die Wirkverbindung zwischen der Brennkraftmaschine und den Antriebsrädern unterbrochen, falls die Reichweite kleiner oder gleich der zweiten Entfernung ist. Eine Unterbrechung der Wirkverbindung zwischen der Brennkraftmaschine und den Antriebsrädern wird beispielsweise durch Betätigung einer Kupplung zwischen der Brennkraftmaschine und dem Getriebe erreicht. Ist die Wirkverbindung zwischen der Brennkraftmaschine und den Antriebsrädern unterbrochen, so wird die Brennkraftmaschine im Leerlauf betrieben, um zu gewährleisten, dass die Brennkraftmaschine mit einer Mindestdrehzahl arbeitet. Da keine Energie durch die Brennkraftmaschine zum Antrieb des Fahrzeugs benötigt wird, ist der Kraftstoffverbrauch im Leerlauf der Brennkraftmaschine vergleichsweise gering. Diese Ausführungsform ermöglicht es, ein Erreichen des Zielobjektes besonders kraftstoffsparend zu ermöglichen, indem die Brennkraftmaschine bei der Annäherung an das Zielobjekt möglichst früh im Leerlauf bzw. im Schubabschaltemodus betrieben wird.

Die Aufgabe wird auch durch ein Steuergerät der eingangs genannten Art dadurch gelöst, dass das Steuergerät Mittel aufweist zum

- Erfassen einer Geschwindigkeit des Fahrzeugs,
- Ermitteln eines Zielobjekts;
- Ermitteln einer ersten Entfernung des Fahrzeugs zu dem Zielobjekt;
- Ermitteln einer zweiten Entfernung in Abhängigkeit eines Toleranzbereichs, so dass die Summe aus der zweiten Entfernung und dem Toleranzbereich stets kleiner oder gleich der ersten Entfernung ist.
- Ermitteln einer Reichweite des Fahrzeugs, unter der Annahme, dass die Brennkraftmaschine nicht in Wirkverbindung mit den Antriebsrädern steht; und
- Ermitteln einer Getriebeuntersetzung in Abhängigkeit der Geschwindigkeit des Fahrzeugs derart, dass die Brennkraftmaschine in dem Schubabschaltemodus betreibbar ist.

Vorzugsweise ist das Steuergerät zur Ausführung des erfindungsgemäßen Verfahrens programmiert.

Die Aufgabe wird ferner durch ein Fahrzeug der eingangs genannten Art dadurch gelöst, das Fahrzeug Mittel aufweist zum

- Ermitteln einer Geschwindigkeit des Fahrzeugs;
- Ermitteln eines Zielobjekts;

- Ermitteln einer ersten Entfernung des Fahrzeugs von dem Zielobjekt;
- Überprüfen des Vorliegens einer Vortriebsanforderung;
- Erkennen, ob die Brennkraftmaschine in Wirkkontakt mit den Antriebsrädern steht;
- Ermitteln einer Reichweite des Fahrzeugs;
- Ermitteln einer Getriebeuntersetzung (gangi) in Abhängigkeit der Geschwindigkeit (v) derart, dass die Brennkraftmaschine (2) in dem Schubabschaltemodus betreibbar ist.

Vorzugsweise weist das Fahrzeug ein Steuergerät zur Ausführung eines erfindungsgemäßen Verfahrens auf.

Von besonderer Bedeutung ist die Realisierung dieser Erfindung in Form eines Computerprogramms. Dabei ist das Computerprogramm auf einem Rechengerät bzw. einem Steuergerät, insbesondere einem Mikroprozessor, ablauffähig und zur Ausführung des erfindungsgemäßen Verfahrens geeignet. In diesem Fall wird also die Erfindung durch das Computerprogramm realisiert, so das dieses Computerprogramm in gleicher Weise die Erfindung darstellt, wie das Verfahren, zu dessen Ausführung das Computerprogramm geeignet ist. Das Computerprogramm ist vorzugsweise auf einem Speicherelement abgespeichert. Als Speicherelement kann insbesondere ein Random-Access-Memory, ein Read-Only-Memory oder ein Flash-Memory zur Anwendung kommen.

Zeichnungen

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnungen dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:

Figur 1 ein erfindungsgemäßes Fahrzeug;

Figur 2 eine schematische Darstellung von Größen, die die Beziehungen eines Fahrzeug und eines Zielobjekts beschreiben;

Figur 3 ein vereinfachtes Ablaufdiagramm für die Ermittlung einer Getriebeuntersetzung in einem erfindungsgemäßen Verfahren;

Figur 4 eine graphische Darstellung eines Kennfeldes zur Ermittlung einer Drehzahl, sowie von Schwell- und Offset-Werten; und

Figur 5 eine vereinfachte, schematische Darstellung von Berechnungsschritten zur Bestimmung der Reichweite.

Beschreibung der Ausführungsbeispiele

In Figur 1 ist ein Fahrzeug F dargestellt, das eine Brennkraftmaschine 2 und zwei Antriebsräder 10 aufweist. Über eine Kupplung 21 ist ein Getriebe 4 an die Brennkraftmaschine 2 angeschlossen. Das Getriebe 4 kann beispielsweise ein manuell schaltbares Stufengetriebe oder ein automatisiertes Getriebe sein. Es ist ebenso denkbar, dass das Getriebe 4 ein automatisches Getriebe ist, wobei dann gegebenenfalls auf eine Kupplung 21 verzichtet werden kann. Es ist auch möglich, dass das Getriebe 4 ein kontinuierlich verstellbares Getriebe (CVT) ist.

Das Getriebe steht mittels einer Kardanwelle 11, eines Differentialgetriebes 3 und mittels Antriebswellen 12 in einer Wirkverbindung mit den Antriebsrädern 10.

Mittels des Getriebes 4 kann durch Einlegen eines Ganges eine nicht dargestellte Getriebeuntersetzung gangi angewählt werden. Mittels der Kupplung 21 kann so eine Wirkverbindung zwischen der Brennkraftmaschine 2 und dem Getriebe 4 und damit zwischen der Brennkraftmaschine 2 und den Antriebsrädern 10 hergestellt werden, so dass bei einem Betrieb der Brennkraftmaschine 2 die Drehbewegung der Brennkraftmaschine 2 über die Kupplung 21 und das Getriebe 4, sowie die Kardanwelle 11, das Differentialgetriebe 3 und die Antriebswellen 12 an die Antriebsräder 10 übertragen wird.

Analog kann umgekehrt auch eine Drehbewegung der Antriebsräder 10 eine Drehbewegung der Brennkraftmaschine 2 bewirken. Diese Eigenschaft wird beispielsweise bei einem sogenannten Anschieben eines Fahrzeugs F ausgenutzt, wenn die Brennkraftmaschine 2 ohne eine Startvorrichtung, wie beispielsweise ein Anlasser, gestartet werden soll.

Das Fahrzeug F weist außerdem ein Assistenzsystem 5 und ein mit dem Assistenzsystem 5 über eine Datenleitung 14 verbundenes Steuergerät 6 auf. Das Assistenzsystem 5 kann beispielsweise die Funktionalität eines Navigationssystems aufweisen, das mittels einer Antenne 25 ein GPS-Signal (Global Positioning System) empfängt und damit eine aktuelle Position des Fahrzeugs ermittelt. Es ist auch denkbar, dass das Assistenzsystem 5 die Funktionalität eines ACC-Systems (Adaptive Cruise Control) aufweist, das mittels eines Sensors 26 Objekte erfassen kann, denen sich das Fahrzeug F nähert bzw. die sich dem Fahrzeug F nähern. Der Sensor 26 kann dabei beispielsweise als ein Radarsensor oder als ein Lasersensor ausgestaltet sein.

Das Steuergerät 6 weist einen Mikroprozessor 8 und ein mit dem Mikroprozessor 8 über ein Bussystem verbundenes Speicherelement 9 auf. Dabei kann das Speicherelement 9 beispielsweise als ein Read-Only-Memory (ROM) oder als ein Random-Access-Memory (RAM) ausgebildet sein.

Das Steuergerät 6 ist über eine Datenleitung 15 mit der Brennkraftmaschine 2 und über eine Datenleitung 16 mit dem Getriebe 4 verbunden.

In Figur 2 ist ein Fahrzeug F dargestellt, das sich mit einer Geschwindigkeit v auf ein Zielobjekt Z, beispielsweise eine rote Ampel oder einen vorrausfahrenden LKW, zubewegt. Dabei bewegt sich das Zielobjekt Z, also beispielsweise der LKW, mit einer Geschwindigkeit vziel. Mit TA ist eine tatsächliche (erste) Entfernung von dem Fahrzeug F zu dem Zielobjekt Z bezeichnet.

Mit ∆skupplaus ist die Strecke bezeichnet, die das Fahrzeug F zurücklegen würde, falls sich die Brennkraftmaschine 2 nicht in Wirkkontakt mit den Antriebsrädern 10 befindet, beispielsweise bei betätigter Kupplung 21 oder weil in dem Getriebe 4 kein Gang eingelegt ist. In einer zweiten Entfernung sziel von dem Fahrzeug F und mit einem Sicherheitsabstand SA zu dem Zielobjekt Z ist zwischen dem Zielobjekt Z und dem Fahrzeug F ein Zielpunkt ZP dargestellt. Ferner ist eine Strecke DSZIEL zwischen dem Zielpunkt ZP und dem Zielobjekt Z dargestellt.

In der in Figur 2 dargestellten Situation wurde, beispielsweise durch einen Radarsensor 26 oder anhand einer kartographischen Information aus dem Assistenzsystem 5, ein Zielobjekt Z erkannt. In dieser Situation wird davon ausgegangen, dass sich das Fahrzeug F nur soweit an das Zielobjekt Z annähern soll, dass der Sicherheitsabstand SA eingehalten werden kann, was in dem Zielpunkt ZP der Fall ist. Bis zum Erreichen des Zielpunktes ZP hat das Fahrzeug noch die zweite Entfernung sziel zurückzulegen. Die zweite Entfernung sziel wird beispielsweise in dem Steuergerät 6 bestimmt, nachdem das Steuergerät 6 über die Datenleitung 14 Informationen über die erste Entfernung TA des Zielobjektes Z erhalten hat. Mittels eines vorgebbaren Sicherheitsabstandes SA lässt sich beispielsweise die zweite Entfernung sziel durch sziel = TA - SA bestimmen. Die Strecke DSZIEL gibt einen Toleranzbereich an, der besagt, wieweit sich das Fahrzeug F über den Zielpunkt ZP maximal hinausbewegen darf. Dabei ist stets DSZIEL $\leq$ SA. Der Toleranzbereich soll gewährleisten, dass das Fahrzeug F den Zielpunkt auf jeden Fall erreicht.

In Figur 3 ist der Ablauf eines erfindungsgemäßen Verfahrens zum Ermitteln einer Getriebeuntersetzung bzw. zum Anwählen eines Ganges, während der Annäherung eines erfindungsgemäßen Fahrzeugs F an ein Zielobjekt Z, beschrieben. Bei stufenlosen Getrieben, beispielsweise einem CVT-Getriebe, wird im allgemeinen der Begriff "Getriebeuntersetzung" zur Definition eines durch das stufenlose Getriebe erbrachten Untersetzungsverhältnisses der Drehzahl der Brennkraftmaschine 2 einerseits und der Drehzahl der Kardanwelle 11 andererseits, verwendet. Bei Stufengetrieben, wie manuell schaltbaren, automatischen oder automatisierten Getrieben, wird jedoch im allgemeinen von Getriebestufen bzw. von Gängen gesprochen. Dabei entspricht ein "hoher" Gang einer niedrigen Getriebeuntersetzung und umgekehrt.

Das Verfahren startet in einem Schritt 100, beispielsweise wenn ein Zielobjekt Z mittels des Assistenzsystems 5 erkannt wurde und das Zielobjekt Z betreffende Informationen über die Datenleitung 14 von dem Assistenzsystem 5 an das Steuergerät 6 übertragen wurden. Aus Gründen der einfacheren Darstellung des Verfahrens wird davon ausgegangen, dass in dem Getriebe 4 des Fahrzeugs während des Starts des Verfahrens ein Gang gangi eingelegt ist, wobei der aktuell eingelegte Gang gangi in Figur 3 auch als Gang iist bezeichnet wird. Für das Verfahren ist es jedoch prinzipiell unerheblich, cb das Fahrzeug bei dem Start des Verfahrens in ein- oder ausgekuppeltem Zustand betrieben wird.

In einem Schritt 102 wird die Reichweite ∆skupplaus des Fahrzeugs F bestimmt, unter der Annahme, dass das Fahrzeug F in ausgekuppeltem Zustand betrieben wird, also keine kraftschlüssige Verbindung zwischen der Brennkraftmaschine 2 und den Antriebsrädern 10 besteht.

In einem Schritt 104 wird geprüft, ob eine Vortriebsanforderung, beispielsweise durch eine Betätigung eines Gaspedals durch den Fahrer oder durch ein Geschwindigkeitsregelsystem vorliegt. Nur wenn dies nicht der Fall ist, wird das Verfahren in einem Schritt 106 fortgesetzt. In dem Schritt 106 wird geprüft, ob die Gefahr einer Kollision B_KolDet besteht. Eine Kollision B KolDet wird beispielsweise dann erkannt, wenn das Fahrzeug F im ausgekuppelten Zustand den Zielpunkt ZP um mehr als den vorgebbaren Toleranzbereich DSZIEL mit einer Geschwindigkeit überschreiten würde, die größer als die Geschwindigkeit des Zielobjektes Z ist.

Besteht keine Gefahr einer Kollision B_KolDet, so wird in dem Schritt 110 die kraftschlüssige Verbindung (sogenannte Wirkverbindung) zwischen der Brennkraftmaschine 2 und den Antriebsrädern 10 beispielsweise durch Betätigen der Kupplung 21 unterbrochen.

Wird jedoch in dem Schritt 106 die Gefahr einer Kollision B_KolDet erkannt, so kann eine Abbremsung des Fahrzeugs F durchgeführt werden. Dazu wird das Verfahren in einem Schritt 108 fortgesetzt. Dort wird eine aktuelle Drehzahl nist der Brennkraftmaschine 2 - unter der Annahme, dass die Brennkraftmaschine 2 in Wirkverbindung mit den Antriebsrädern steht - erfasst und geprüft, ob diese Drehzahl nist oberhalb der Summe eines ersten Schwellwertes nSAB und eines ersten Offset-Wertes ∆SAB0 liegt, ob also nist > nSAB + ∆SAB0 gilt. Dabei kann die Summe nSAB + ∆SAB0 als ein zweiter Schwellwert betrachtet werden. Die Abfrage in dem Schritt 108 wird durchgeführt um zu verhindern, dass die Drehzahl nist der Brennkraftmaschine 2 einen derart großen Wert annimmt, dass die damit verbundene Bremswirkung zu einem so starken Abbremsen des Fahrzeugs führen würde, dass das Fahrzeug den Zielpunkt ZP nicht mehr erreichen könnte. Außerdem würde solch ein starkes Abbremsen von dem Fahrer als überraschend und unangenehm empfunden werden.

Ist die aktuelle Drehzahl nist nicht größer als (nSAB + ΔSAB0), so wird in einem Schritt 112 ein Zähler i mit dem Wert iist, der dem aktuell eingelegten Gang zugeordnet ist, initialisiert. In einem Schritt 114 wird dann geprüft, ob die Drehzahl nist unterhalb der Summe des ersten Schwellwertes nSAB und eines zweiten Offset-Wertes ΔSABU1 liegt, ob also nist < nSAB + ΔSABU1 gilt. Dabei kann die Summe nSAB + ΔSABU1 als ein dritter Schwellwert betrachtet werden. Liegt die aktuelle Drehzahl nist nicht unterhalb dieses dritten Schwellwertes, so wird in einem Schritt 126 der zu ermittelte Gang gangsoll gleich dem gangi gesetzt. Da i in dem Schritt 112 auf iist gesetzt wurde, was dem aktuell eingelegten Gang entspricht, wird in diesem Fall der aktuelle Gang gangiist als anzuwählender Gang gangsoll ermittelt und das Verfahren in dem Schritt 130 beendet.

Wird in dem Schritt 114 jedoch erkannt, dass die aktuelle Drehzahl nist der Brennkraftmaschine 2 unterhalb der Summe des ersten Schwellwertes nSAB und des zweiten Offset-Wertes ΔSABU1 liegt, dass also nist < nSAB + ΔSABU1 gilt, so wird in einem Schritt 116 der nächstkleinere Gang gangi ermittelt. Dazu wird der Wert von i um den Wert 1 verringert, i:= i-1. Daraufhin wird das Verfahren in dem Schritt 126 fortgesetzt. Dort wird ebenfalls der zu ermittelten Gang gangsoll gleich dem gangi gesetzt. Allerdings entspricht nun der Gang gangi nicht mehr dem aktuellen Gang gangiist, sondern dem nächstkleineren Gang. Durch das Einlegen eines niedrigeren Gang erhöht sich die Drehzahl der Brennkraftmaschine bei gleicher Geschwindigkeit des Fahrzeugs. Somit kann in dem Schritt 116 der Gang solange verringert werden, bis die Drehzahl nist nicht mehr kleiner als nSAB + ΔSABU1 ist. Kann diese Bedingung auch im ersten Gang bzw. in der größten Getriebeuntersetzung nicht erreicht werden, so bricht das Verfahren ab. (In Figur 3 nicht dargestellt.) Beispielsweise wird dann durch das Steuergerät 6 veranlasst, dass das Fahrzeug im Leerlauf betrieben wird.

Wurde in dem Schritt 108 erkannt, dass die aktuelle Drehzahl nist oberhalb der Summe des ersten Schwellwertes nSAB und des ersten Offset-Wertes ΔSAB0 liegt, gilt also nist > nSAB + ΔSAB0, so wird zu einem Schritt 120 verzweigt. Dort wird zunächst der größte Gang gangMAX ermittelt, indem der Zähler i auf den Wert MAX gesetzt wird. In einem Schritt 122 wird dann geprüft, ob ein aus der Summe des ersten Schwellwertes nSAB und eines dritten Offset-Wertes ΔSABU2 gebildeter vierter Schwellwert (nSAB + ΔSABU2) kleiner als eine Drehzahl n ist, die sich ergäbe, wenn der Gang gangi (bzw. im vorliegenden Fall der Gang gangMAX) eingelegt wäre und die Brennkraftmaschine 2 in Wirkverbindung mit den Antriebsrädern 10 stünde. Ist dies nicht der Fall, so wird solange zu einem Schritt 124 verzweigt und i um den Wert 1 verringert, bis ein i gefunden wurde, für das die Bedingung in dem Schritt 122 erfüllt ist. Das bedeutet, dass - ausgehend von dem größtmöglichen Gang gangMAX - solange ein nächstkleinerer Gang gangi gesucht wird, bis die Drehzahl n der Brennkraftmaschine 2, die sich bei eingelegtem Gang ergäbe, falls die Brennkraftmaschine 2 in Wirkverbindung mit den Antriebsrädern stünde, oberhalb des vierten Schwellwertes liegt. Ist ein solcher Gang gangi gefunden, so wird dieser in dem Schritt 126 ausgewählt und das Verfahren in dem Schritt 130 beendet. Wieder nicht dargestellt ist der Fall, dass kein solcher Gang gefunden werden kann. Es ist denkbar, dass das Verfahren dann endet und das Steuergerät veranlasst, dass das Fahrzeug in ausgekuppeltem Zustand betrieben wird.

Die Bestimmung einer Drehzahl n, die die Brennkraftmaschine 2 aufweisen würde, falls das Fahrzeug mit einem eingelegten Gang gangi betrieben werden würde, kann beispielsweise mittels eines Kennfeldes durchgeführt werden. Ein Beispiel eines solchen Kennfeldes ist in Figur 4 dargestellt. Dort ist in einer horizontalen Achse V die Geschwindigkeit und in einer vertikalen Achse nEng die Drehzahl aufgetragen. Auf der Achse V sind die Geschwindigkeiten 30, 90, 150, 210 in km/h angegeben. Auf der Achse nEng sind die Drehzahlen von 2000 U/min bis 6000 U/min in 1000er Schritten dargestellt. Für ein Getriebe mit 5 Gängen sind Kennlinien 1.Gang, 2.Gang, ..., 5.Gang dargestellt.

Anhand der Kennlinien 1.Gang, 2.Gang, ..., 5.Gang kann für jeden Gang gangi des Getriebes 4 für eine gegebene Geschwindigkeit v die Drehzahl nEng ermittelt werden, mit der sich die Brennkraftmaschine 2 drehen würde, wenn der entsprechende Gang gangi in dem Getriebe 4 eingelegt wäre und die Brennkraftmaschine über das Getriebe 4 in Wirkverbindung mit den Antriebsrädern 10 stünde.

In Figur 4 ist außerdem der Schwellwert nSAB als gestrichelte Linie für einen Wert nSAB = 1600 U/min dargestellt. Dieser Wert gibt in der dargestellten Ausführungsform die Drehzahl nEng an, ab der ein Betrieb der Brennkraftmaschine 2 in dem Schubabschaltemodus möglich ist. Anhand dieses Schwellwertes nSAB lässt sich beispielsweise für jeden Gang gangi des Getriebes 4 bestimmen, ab welcher Geschwindigkeit v des Fahrzeugs F ein Schubabschaltebetrieb der Brennkraftmaschine möglich ist. Bei dem in Figur 4 dargestellten Kennfeld ergäbe sich beispielsweise, dass bei eingelegtem 5. Gang ein Betrieb der Brennkraftmaschine 2 im Schubabschaltemodus ab einer Geschwindigkeit v des Fahrzeugs F von ca. 60 km/h möglich wäre.

In dem Kennfeld in Figur 4 sind außerdem die Offset-Werte ΔSABU1, ΔSABU2 und ΔSAB0 in Relation zu dem Schwellwert nSAB dargestellt. Der aus einer Summierung der Offset-Werte ΔSABU1, ΔSABU2 und ΔSAB0 mit dem ersten Schwellwert nSAB resultierende zweite, dritte und vierte Schwellwert ist jeweils durch eine gestrichelte Linie dargestellt. Wie in dem in Figur 3 dargestellten Verfahren bereits gezeigt, kommt den Schwellwerten bzw. den Offset-Werten folgende Bedeutung zu:

- nSAB: Mindestdrehzahl, ab der ein Betrieb der Brennkraftmaschine 2 in einem Schubabschaltemodus möglich bzw. sinnvoll ist.
- ΔSAB0: Oberhalb des durch diesen Offset-Wert bestimmbaren zweiten Schwellwertes soll kein Betrieb der Brennkraftmaschine 2 aufgrund der hohen Bremswirkung im Schubabschaltemodus erfolgen.
- ΔSABU1: Fällt die Drehzahl einer im Schubabschaltemodus betriebenen Brennkraftmaschine 2 unter den durch diesen Offset-Wert bestimmbaren dritten Schwellwert, so soll bei dem in Figur 3 dargestellten erfindungsgemäßen Verfahren, in einen kleineren Gang heruntergeschaltet werden, um weiterhin einen Betrieb der Brennkraftmaschine 2 in dem Schubabschaltemodus zu ermöglichen.
- ΔSABU2: Insbesondere bei der Ermittlung des größtmöglichen Ganges (bzw. der kleinstmöglichen Getriebeuntersetzung) soll die Drehzahl nEng der Brennkraftmaschine 2 oberhalb des durch diesen Offset-Wert bestimmbaren vierten Schwellwertes liegen. So kann sichergestellt werden, dass die Drehzahl nEng nicht innerhalb einer zu kurzen Zeitspanne unter den dritten Schwellwert fällt, was eine Rückschaltung in einen kleineren Gang zur Folge hätte und zumindest als unkomfortabel empfunden würde.

Die Offset-Werte und damit die Schwellwerte sind nicht notwendig fest vorgegeben. Es ist auch vorstellbar, dass diese Schwellwerte abhängig von einem Betriebszustand des Fahrzeugs ermittelt werden. So ist es vorstellbar, dass der erste Schwellwert und die Offset-Werte in Abhängigkeit einer Betriebstemperatur der Brennkraftmaschine 2 bestimmt werden. Es ist ebenfalls vorstellbar, dass die Schwellwerte in Abhängigkeit einer Steigung der befahrenen Strecke bestimmt werden, so dass unterschieden wird, ob sich das Fahrzeug auf ebener Strecke, bergab oder bergauf bewegt.

In Figur 5 sind schematisch Verfahrensschritte dargestellt, mit deren Hilfe die Reichweite Δskupplaus, die das Fahrzeug F in ausgekuppeltem Zustand zurücklegen würde, berechnet werden kann.

Dieses Verfahren wird in einem Schritt 200 gestartet, beispielsweise während der Ausführung des Schrittes 102 in dem in Figur 3 dargestellten erfindungsgemäßen Verfahren, und beispielsweise auf dem Mikroprozessor 8 in dem Steuergerät 6 ausgeführt.

In einem Schritt 202 wird geprüft, ob ein Zielobjekt Z erkannt wurde. Dabei kann das Zielobjekt Z beispielsweise mittels des an das Assistenzsystem 5 angeschlossenen Radarsensors 25 ermittelt werden. Ist ein Zielobjekt Z erkannt, so wird in einem Schritt 204 eine Initialisierung verschiedener Werte durchgeführt. Beispielsweise wird die Reichweite Δskupplaus auf 0 gesetzt. Außerdem werden eine Geschwindigkeit v0 mit der aktuellen Geschwindigkeit des Fahrzeugs F und eine Beschleunigung mit der aktuellen Beschleunigung $\dot{v}$ initialisiert. Ferner wird in diesem Schritt zunächst davon ausgegangen, dass keine Gefahr einer Kollision mit Zielobjekt Z besteht.

Bewegt sich ein Fahrzeug F in ausgekuppeltem Zustand, so erfährt das Fahrzeug F, abhängig beispielsweise von dessen Geschwindigkeit v, einem Luftwiderstandsbeiwert cw und einem Steigungsabhängigen Fahrwiderstand Fα, eine Beschleunigung $\dot{v}$. Diese Beschleunigung $\dot{v}$ ist beispielsweise bei ebener Fahrstrecke (Steigung = 0) oder ansteigender Fahrstrecke (Steigung > 0) ein negativer Wert, $\dot{v} < 0$. Eine negative Beschleunigung $\dot{v}$ hat zur Folge, dass sich die Geschwindigkeit des Fahrzeugs F verringert, bis es schließlich zum Stillstand kommt. Während der dabei zurückgelegten Strecke Δskupplaus verändert sich kontinuierlich die Beschleunigung $\dot{v}$, da diese beispielsweise von der Geschwindigkeit v und dem Luftwiderstandsbeiwert cw abhängt. Dieser Zusammenhang ist mit einer auf der sogenannten Zugkraftgleichung basierenden Formel beschreibbar:

$$\dot{v}_{i+1} = \frac{1}{e \cdot m}\left(-F_\alpha - cw \cdot v_{i+1}{}^2\right) \qquad (1)$$

Dabei bezeichnen:

$\dot{v}_i$ : Beschleunigung des Fahrzeugs F;
Fα : Steigungsabhängiger Fahrwiderstand;
cw : Luftwiderstandsbeiwert;
$v_i$ : Geschwindigkeit des Fahrzeugs F;
m : Masse des Fahrzeugs F;
e : Massezuschlagsfaktor zur Kompensation rotatorischer Trägheiten;

Diese Formel (1) ist numerisch lösbar. Beispielsweise wird mittels eines numerischen Integrationsverfahrens zu bestimmten Zeitpunkten i die momentane Beschleunigung $\dot{v}_i$ unter Verwendung der Formel (1) berechnet. Aus der so gewonnen Beschleunigung $\dot{v}_i$ lässt sich dann die Geschwindigkeit $v_i$ zu dem Zeitpunkt i berechnen durch:

$$v_i = v_{i-1} + \dot{v}_{i-1} \cdot dt \qquad (2)$$

Dabei wird der Zeitpunkt i relativ zu dem vorangegangen Zeitpunkt i-1 bestimmt. Diese zeitliche Differenz, bzw. das Zeitintervall wird mit dt bezeichnet. Beispielsweise könnte dt = 500 ms gewählt werden. Die Reichweite Δskupplaus ergibt sich dann durch Addieren der während des betrachteten Zeitintervalls dt mit der Geschwindigkeit $v_i$ zurückgelegten Wegstrecke zu:

$$\Delta skupplaus_{i+1} = \Delta skupplaus_i + (v_i - vziel) \cdot dt \qquad (3)$$

Dabei wird vorteilhafterweise die Geschwindigkeit vziel berücksichtigt, mit der sich das Zielobjekt Z, beispielsweise ein vorrausfahrender LKW, bewegt. Es ist auch denkbar, die Geschwindigkeit vziel ebenfalls zu jedem Zeitpunkt i neu zu bestimmen, also ein $vziel_i$ zu berücksichtigen.

In einem Schritt 206 werden die drei Berechungsschritte (1), (2) und (3) der numerischen Integration für ein Zeitintervall i zur Bestimmung der Reichweite Δskupplaus durchgeführt. In einem Schritt 208 wird dann geprüft, ob der bisher errechnete Wert für die Reichweite Δskupplaus größer oder gleich der Summe der zweiten Entfernung sziel zwischen dem Fahrzeug F und dem Zielpunkt ZP und dem Toleranzbereich DSZIEL ist. Zusätzlich wird geprüft, ob die aktuelle Geschwindigkeit $v_i$ des Fahrzeugs F größer oder gleich der Geschwindigkeit vziel des Zielobjektes ist. Ist beides der Fall, so wird in einem Schritt 212 die Gefahr einer Kollision B_KolDet erkannt und die Berechnung in einem Schritt 220 beendet.

Andernfalls wird in einen Schritt 210 verzweigt und geprüft, ob die bisher summierte Reichweite Δskupplaus kleiner oder gleich der zweiten Entfernung sziel ist und ob die aktuelle Geschwindigkeit $v_i$ des Fahrzeugs F kleiner oder gleich der Geschwindigkeit des Zielobjektes ist. Ist beides der Fall, so wird darauf geschlossen, dass das Fahrzeug den Zielpunkt ZP nicht erreichen wird und die Berechnung wird in dem Schritt 220 beendet.

Ist jedoch eine dieser Bedingungen nicht erfüllt, so verzweigt das Verfahren wieder zu dem Schritt 206, wo für ein nächstes Intervall i+1 die Berechnungsschritte (1), (2), (3) durchgeführt wird.

Selbstverständlich ist es denkbar, dass die Bestimmung der Reichweite Δskupplaus mit einem Verfahren durchgeführt wird, das von dem in Figur 5 dargestellten Verfahren abweicht. Beispielsweise ist es denkbar, dass Δskupplaus zuerst berechnet wird und erst anschließend ein Vergleich analog zu den Schritten 208, 210 und 212 durchgeführt wird. Das könnte beispielsweise der Fall sein, wenn ein Verfahren zur Ermittlung der Reichweite Δskupplaus in Hardware realisiert wird und damit besonders schnell durchgeführt werden kann.

Es sind ebenfalls verschiedene Ausführungsformen des in Figur 3 dargestellten Verfahrens denkbar. Beispielsweise könnte unabhängig von einem eingelegten Gang iist stets statt zu dem Schritt 108 direkt zu dem Schritt 120 verzweigt werden, wodurch die Schritte 108, 112, 114, 116 entfielen. Das würde bedeuten, dass stets der höchste Gang bzw. die kleinste Getriebeuntersetzung ausgewählt wird, für die ein Betrieb im Schubabschaltemodus derart möglich ist, dass für die Drehzahl nEng gilt:

$$(nSAB + \Delta SABU1) < nEng < (nSAB + \Delta SAB0).$$

## Patentansprüche

1. Verfahren zum Betreiben eines Fahrzeugs (F), insbesondere eines Fahrzeugs (F), das Antriebsräder (10), eine Brennkraftmaschine (2) und ein in Wirkverbindung mit den Antriebsrädern (10) und der Brennkraftmaschine (2) bringbares Getriebe (4) mit mindestens einer anwählbaren Getriebeuntersetzung (gangi) aufweist wobei die folgenden Schritte ausgeführt werden:

    - Ermitteln eines Zielobjekts (Z);
    - Ermitteln einer ersten Entfernung (TA) des Fahrzeugs (F) zu dem Zielobjekt (Z);
    - Ermitteln einer Reichweite (Δskupplaus) des Fahrzeugs (F) unter der Annahme, dass keine Wirkverbindung zwischen der Brennkraftmaschine (2) und den Antriebsrädern (10) besteht;
    - Ermitteln einer zweiten Entfernung (sziel) in Abhängigkeit der ersten Entfernung (TA) und eines vorgebbaren Toleranzbereichs (DSZIEL), so dass sziel + DSZIEL ≤ TA gilt;

- Ermitteln einer Getriebeuntersetzung (gangi), so dass die Brennkraftmaschine (2) in dem Schubabschaltemodus betrieben wird, falls die Getriebeuntersetzung (gangi) in Wirkverbindung mit den Antriebsrädern (10) und der Brennkraftmaschine (2) gebracht wird;
- Falls die ermittelte Reichweite (Δskupplaus) größer ist als die Summe aus der zweiten Entfernung (sziel) und dem Toleranzbereich (DSZIEL), Sicherstellen, dass die Getriebeuntersetzung (gangi) sich in Wirkverbindung mit den Antriebsrädern (10) und der Brennkraftmaschine (2) befindet.

**2.** Verfahren nach Anspruch 1 **dadurch gekennzeichnet, dass** der zweite Abstand (sziel) zusätzlich in Abhängigkeit eines vorgebbaren Sicherheitsabstands (SA) ermittelt wird, so dass sziel + SA = TA gilt.

**3.** Verfahren nach Anspruch 1 oder 2, **dadurch gekennzeichnet, dass**

- eine Drehzahl (nEng) erfasst wird;
- das Vorliegen einer Vortriebsanforderung geprüft wird; und
- die Brennkraftmaschine (2) in einem Schubabschaltemodus betrieben wird, falls keine Vortriebsanforderung vorliegt und die Drehzahl (nEng) einen vorgebbaren ersten Schwellwert (nSAB) überschreitet;

**4.** Verfahren nach einem der Ansprüche 1 bis 3, **dadurch gekennzeichnet, dass** die Berechung der Reichweite (Δskupplaus) in Abhängigkeit einer Fahrzeugmasse (m), eines Luftwiderstandsbeiwertes (cw), eines Massezuschlagsfaktors (e), einer aktuellen Geschwindigkeit (v) und/oder der aktuellen Beschleunigung ($\dot{v}$) des Fahrzeugs (F) durchgeführt wird.

**5.** Verfahren nach einem der vorangehenden Ansprüche, **dadurch gekennzeichnet, dass** die erste Entfernung und/oder die zweite Entfernung (sziel) in Abhängigkeit einer Geschwindigkeit (vziel) des Zielobjekts (Z) ermittelt wird.

**6.** Verfahren nach einem der vorangehenden Ansprüche, wobei das Getriebe (4) mindestens zwei verschiedene Getriebeuntersetzungen (gangi) aufweist, **dadurch gekennzeichnet, dass** die höchste Getriebeuntersetzung (gangMAX) ermittelt wird, bei der die Brennkraftmaschine (2) in dem Schubabschaltemodus betrieben werden kann.

**7.** Verfahren nach einem der vorangehenden Ansprüche, **dadurch gekennzeichnet, dass** eine Getriebeuntersetzung (gangi) derart ermittelt wird, dass die Drehzahl (nEng) nicht größer wird als die Summe aus dem ersten Schwellwert (nSAB) und einem vorgebbaren ersten Offset-Wert (ΔSAB0), wenn die Getriebeuntersetzung (gangi) in Wirkverbindung mit den Antriebsrädern (10) und der Brennkraftmaschine (2) gebracht wird.

**8.** Verfahren nach einem der vorangehenden Ansprüche, **dadurch gekennzeichnet, dass** für eine ausgewählte Getriebeuntersetzung (gangi) die Drehzahl (nEng) überwacht wird und eine größere Getriebeuntersetzung ermittelt wird, falls die Drehzahl (nEng) kleiner als die Summe aus dem ersten Schwellwert (nSAB) und einem vorgebbaren zweiten Offset-Wert (ΔSABU1) ist.

**9.** Verfahren nach einem der vorangehenden Ansprüche, **dadurch gekennzeichnet, dass** eine Getriebeuntersetzung (gangi) derart ermittelt wird, dass die Drehzahl (nEng) größer wird als die Summe aus dem ersten Schwellwert (nSAB) und einem vorgebbaren dritten Offset-Wert (ΔSABU2), wenn die Getriebeuntersetzung (gangi) in Wirkverbindung mit den Antriebsrädern (10) und der Brennkraftmaschine (2) gebracht wird.

**10.** Verfahren nach einem der vorangehenden Ansprüche, **dadurch gekennzeichnet, dass**

- die Reichweite (Δskupplaus) überwacht wird;
- die erste Entfernung (TA) und/oder die zweite Entfernung (sziel) überwacht wird;
- die Wirkverbindung zwischen der Brennkraftmaschine (2) und den Antriebsrädern (10) unterbrochen wird, falls die Reichweite (Δskupplaus) kleiner als die zweite Entfernung (sziel) ist.

**11.** Steuergerät (6), insbesondere Steuergerät (6) zum Steuern und/oder Regeln eines Fahrzeugs (F), wobei das Fahrzeug (F) Antriebsräder (10), eine Brennkraftmaschine (2) und ein in Wirkkontakt mit den Antriebsrädern (10) und der Brennkraftmaschine (2) bringbares Getriebe (4) mit mindestens einer anwählbaren Getriebeuntersetzung aufweist und wobei die Brennkraftmaschine (2) in einem Schubabschaltemodus betreibbar ist, **dadurch gekennzeichnet, dass** das Steuergerät (6) Mittel aufweist zum

- Erfassen einer Geschwindigkeit (v) des Fahrzeugs (F);

- Ermitteln eines Zielobjekts (Z);
- Ermitteln einer ersten Entfernung (TA) des Fahrzeugs (F) zu dem Zielobjekt (Z);
- Ermitteln einer zweiten Entfernung (sziel) in Abhängigkeit eines Toleranzbereichs (DSZIEL), so dass sziel + DSZIEL ≤ TA gilt;
- Ermitteln einer Reichweite (Δskupplaus) des Fahrzeugs (F), unter der Annahme, dass die Brennkraftmaschine (2) nicht in Wirkverbindung mit den Antriebsrädern (10) steht; und
- Ermitteln einer Getriebeuntersetzung (gangi) in Abhängigkeit der erfassten Geschwindigkeit (v) des Fahrzeugs (F) derart, dass die Brennkraftmaschine (2) in dem Schubabschaltemodus betreibbar ist.

**12.** Steuergerät (6) nach Anspruch 11, **dadurch gekennzeichnet, dass** das Steuergerät (6) zur Ausführung eines Verfahrens nach einem der Ansprüche 1 bis 10 programmiert ist.

**13.** Fahrzeug (F), das Antriebsräder (10), eine Brennkraftmaschine (2), und ein in Wirkkontakt mit den Antriebsrädern (10) und der Brennkraftmaschine (2) bringbares Getriebe (4) mit mindestens einer wählbaren Getriebeuntersetzung (gangi) aufweist, wobei die Brennkraftmaschine (2) in einem Schubabschaltemodus betreibbar ist, **dadurch gekennzeichnet, dass** das Fahrzeug (F) Mittel aufweist zum

- Ermitteln einer Geschwindigkeit (v) des Fahrzeugs (F);
- Ermitteln eines Zielobjekts (Z);
- Ermitteln einer ersten Entfernung (TA) des Fahrzeugs (F) von dem Zielobjekt (Z);
- Überprüfen des Vorliegens einer Vortriebsanforderung;
- Erkennen, ob die Brennkraftmaschine (2) in Wirkkontakt mit den Antriebsrädern (10) steht;
- Ermitteln einer Reichweite (Δskupplaus) des Fahrzeugs (F);
- Ermitteln einer Getriebeuntersetzung (gangi) in Abhängigkeit der Geschwindigkeit (v) derart, dass die Brennkraftmaschine (2) in dem Schubabschaltemodus betreibbar ist.

**14.** Fahrzeug (F) nach Anspruch 13, **dadurch gekennzeichnet, dass** das Fahrzeug (F) ein Steuergerät (6) zur Ausführung eines Verfahrens nach einem der Ansprüche 1 bis 10 aufweist.

**15.** Computerprogramm, das auf einem Rechengerät bzw. einem Steuergerät (6), insbesondere auf einem Mikroprozessor (8), ablauffähig ist, **dadurch gekennzeichnet, dass** auf dem Steuergerät (6) ein Verfahren nach einem der Ansprüche 1 bis 10 **dadurch** ausgeführt wird, dass das Computerprogramm auf dem Steuergerät (6) abläuft.

**16.** Computerprogramm nach Anspruch 15, **dadurch gekennzeichnet, dass** das Computerprogramm auf einem Speicherelement (9), insbesondere auf einem Random-Access-Memory (RAM), einem Read-Only-Memory (ROM) oder einem Flash-Memory, abgespeichert ist.

## Claims

**1.** Method of operating a vehicle (F), in particular a vehicle (F) which has driven wheels (10), an internal combustion engine (2) and a transmission (4) which can be operatively connected to the driven wheels (10) and to the internal combustion engine (2) and has at least one selectable down step transmission ratio (gangi), the following steps being carried out:

- a target object (Z) is determined;
- a first distance (TA) of the vehicle (F) from the target object (Z) is determined;
- a range (Δskupplaus) of the vehicle (F) is determined assuming that there is no operative connection between the internal combustion engine (2) and the driven wheels (10);
- a second distance (sziel) is determined as a function of the first distance (TA) and of a predefinable tolerance range (DSZIEL) so that sziel + DSZIEL ≤ TA;
- determination of a down step transmission ratio (gangi) so that the internal combustion engine (2) is operated in the overrun cutoff mode if the down step transmission ratio (gangi) is operatively connected to the driven wheels (10) and to the internal combustion engine (2);
- if the range (Δskupplaus) which is determined is greater than the sum of the second distance (sziel) and the tolerance range (DSZIEL), it is ensured that the down step transmission ratio (gangi) is operatively connected to the driven wheels (10) and to the internal combustion engine (2).

**2.** Method according to Claim 1, **characterized in that** the second distance (sziel) is additionally determined as a function of a predefinable safety distance (SA) so that sziel + SA = TA.

**3.** Method according to Claim 1 or 2, **characterized in that**

- a rotational speed (nEng) is acquired;
- testing for the presence of a propulsion request is carried out; and
- the internal combustion engine (2) is operated in an overrun cutoff mode if there is no propulsion request present and the rotational speed (nEng) exceeds a predefinable first threshold value (nSAB).

**4.** Method according to one of Claims 1 to 3, **characterized in that** the range (Δskupplaus) is calculated as a function of a vehicle mass (m), of an air resistance coefficient (cw), of a mass addition factor (e), of a current velocity (v) and/or of the current acceleration ($\dot{v}$) of the vehicle (F).

**5.** Method according to one of the preceding claims, **characterized in that** the first distance and/or the second distance (sziel) are determined as a function of a velocity (vziel) of the target object (Z).

**6.** Method according to one of the preceding claims, the transmission (4) having at least two different down step transmission ratios (gangi), **characterized in that** the highest down step transmission ratio (gangMAX) at which the internal combustion engine (2) can be operated in the overrun cut off mode is determined.

**7.** Method according to one of the preceding claims, **characterized in that** a down step transmission ratio (gangi) is determined in such a way that the rotational speed (nEng) is not higher than the sum of the first threshold value (nSAB) and a predefinable first offset value (ΔSAB0) if the down step transmission ratio (gangi) is operatively connected to the driven wheels (10) and to the internal combustion engine (2).

**8.** Method according to one of the preceding claims, **characterized in that** the rotational speed (nEng) is monitored for a selected down step transmission ratio (gangi) and a higher down step transmission ratio is determined if the rotational speed (nEng) is lower than the sum of the first threshold value (nSAB) and a predefinable second offset value (ΔSABU1).

**9.** Method according to one of the preceding claims, **characterized in that** a down step transmission ratio (gangi) is determined in such a way that the rotational speed (nEng) is higher than the sum of the first threshold value (nSAB) and a predefinable third offset value (ΔSABU2) if the down step transmission ratio (gangi) is operatively connected to the driven wheels (10) and to the internal combustion engine (2).

**10.** Method according to one of the preceding claims, **characterized in that**

- the range (Δskupplaus) is monitored;
- the first distance (TA) and/or the second distance (sziel) is monitored;
- the operative connection between the internal combustion engine (2) and the driven wheels (10) is disconnected if the range (Δskupplaus) is smaller than the second distance (sziel).

**11.** Control unit (6), in particular control unit (6) for performing open-loop and/or closed-loop control of a vehicle (F), the vehicle (F) having driven wheels (10), an internal combustion engine (2) and a transmission (4) which can be placed in operative contact with the driven wheels (10) and the internal combustion engine (2) and which has at least one selectable down step transmission ratio, and it being possible to operate the internal combustion engine (2) in an overrun cut off mode, **characterized in that** the control unit (6) has means for

- sensing a velocity (v) of the vehicle (F);
- determining a target object (Z);
- determining a first distance (TA) of the vehicle (F) from the target object (Z);
- determining a second distance (sziel) as a function of a tolerance range (DSZIEL) so that sziel + DSZIEL ≤ TA;
- determining a range (Δskupplaus) of the vehicle (F), assuming that the internal combustion engine (2) is not operatively connected to the driven wheels (10); and
- determining a down step transmission ratio (gangi) as a function of the sensed velocity (v) of the vehicle (F) in such a way that the internal combustion engine (2) can be operated in the overrun cut off mode.

**12.** Control unit (6) according to Claim 11, **characterized in that** the control unit (6) is programmed to carry out a method according to one of Claims 1 to 10.

**13.** Vehicle (F) which has driven wheels (10), an internal combustion engine (2), and a transmission (4) which can be placed in operative contact with the driven wheels (10) and the internal combustion engine (2) and has at least one selectable down step transmission ratio (gangi), it being possible to operate the internal combustion engine (2) in an overrun cut off mode, **characterized in that** the vehicle (F) has means for

- determining a velocity (v) of the vehicle (F);
- determining a target object (Z);
- determining a first distance (TA) of the vehicle (F) from the target object (Z);
- checking for the presence of a propulsion request;
- detecting whether the internal combustion engine (2) is in operative contact with the driven wheels (10);
- determining a range (Δskupplaus) of the vehicle (F); and
- determining a down step transmission ratio (gangi) as a function of the velocity (v) in such a way that the internal combustion engine (2) can be operated in the overrun cut off mode.

**14.** Vehicle (F) according to Claim 13, **characterized in that** the vehicle (F) has a control unit (6) for carrying out a method according to one of Claims 1 to 10.

**15.** Computer program which can run on a computing unit or a control unit (6), in particular on a microprocessor (8), **characterized in that** a method according to one of Claims 1 to 10 is carried out on the control unit (6) in such a way that the computer program runs on the control unit (6).

**16.** Computer program according to Claim 15, **characterized in that** the computer program is stored in a memory element (9), in particular in a random access memory (RAM), a read only memory (ROM) or a flash memory.

**Revendications**

**1.** Procédé de commande d'un véhicule (F), notamment d'un véhicule (F) comportant des roues motrices (10), un moteur à combustion (2) et une transmission (4) qui peut coopérer avec les roues motrices (10) et le moteur à combustion (2) avec au moins une démultiplication de transmission sélectionnée (gangi), procédé selon lequel on effectue les étapes suivantes :

- on détermine un objet de destination (Z),
- on détermine une première distance (TA) entre le véhicule (F) et l'objet de destination (Z),
- on détermine une portée (Δskupplaus) du véhicule (F) dans l'hypothèse qu'il n'y a pas de coopération entre le moteur à combustion (2) et les roues motrices (10),
- on détermine une seconde distance (sziel) en fonction de la première distance (TA) et d'une plage de tolérance prédéfinie (DSZIEL) de façon à avoir la relation sziel + DSZIEL ≤ TA,
- on détermine un rapport de transmission (gangi) pour que le moteur à combustion (2) fonctionne en mode de coupure de poussée si le rapport de transmission (gangi) coopère avec les roues motrices (10) et le moteur à combustion (2),
- si la portée déterminée (Δskupplaus) est supérieure à la somme de la seconde distance (sziel) et de la plage de tolérance (DSZIEL), on garantit que le rapport de transmission (gangi) se trouve en coopération avec les roues motrices (10) et le moteur à combustion (2).

**2.** Procédé selon la revendication 1,
**caractérisé en ce qu'**
on détermine la seconde distance (sziel) en plus en fonction d'une distance de sécurité prédéfinie (SA) de façon à avoir la relation sziel + SA = TA.

**3.** Procédé selon les revendications 1 ou 2,
**caractérisé en ce qu'**

- on saisit une vitesse de rotation (nEng),
- on vérifie l'existence d'une demande d'entraînement et

- on fait fonctionner le moteur à combustion (2) en mode de coupure de poussée s'il n'y a pas de demande de déplacement et si la vitesse de rotation (nEng) dépasse vers le haut un premier seuil prédéfini (nSAB).

**4.** Procédé selon l'une des revendications 1 à 3,
**caractérisé en ce qu'**
on calcule la portée (skupplaus) en fonction de la masse (m) du véhicule, d'un coefficient de résistance d'air (cw), d'un coefficient d'addition de masses (e), d'une vitesse actuelle (v) et/ou de l'accélération actuelle ($\dot{v}$) du véhicule (F).

**5.** Procédé selon l'une des revendications précédentes,
**caractérisé en ce qu'**
on détermine la première distance et/ou la seconde distance (sziel) en fonction d'une vitesse (vziel) de l'objet de destination (Z).

**6.** Procédé selon l'une quelconque des revendications précédentes, selon lequel
la transmission (4) comporte au moins deux raccords de transmission différents (gangi),
**caractérisé en ce qu'**
on détermine le rapport de transmission le plus élevé (gangMAX) pour lequel le moteur à combustion (2) peut fonctionner en mode de coupure de poussée.

**7.** Procédé selon l'une quelconque des revendications précédentes,
**caractérisé en ce qu'**
on détermine le rapport de transmission (gangi) pour que la vitesse de rotation (nEng) ne soit pas supérieure à la somme de la première valeur de seuil (nSAB) et d'une première valeur de décalage prédéfinie (ΔSAB0) si le rapport de vitesses (gangi) est mis en coopération avec les roues motrices (10) et le moteur à combustion (2).

**8.** Procédé selon l'une quelconque des revendications précédentes,
**caractérisé en ce que**
pour un rapport de transmission choisi (gangi), on surveille la vitesse de rotation (nEng) et on détermine un rapport de transmission plus élevé si la vitesse de rotation (nEng) est inférieure à la somme du premier seuil (nSAB) et d'une seconde valeur de décalage prédéfinie (ΔSABU1).

**9.** Procédé selon l'une des revendications précédentes,
**caractérisé en ce qu'**
on détermine un rapport de transmission (gangi) de façon que la vitesse de rotation (nEng) soit supérieure à la somme du premier seuil (nSAB) et d'une troisième valeur de décalage prédéfinie (ΔSABU2) si le rapport de transmission (gangi) est mis en coopération avec les roues motrices (10) et le moteur à combustion (2).

**10.** Procédé selon l'une quelconque des revendications précédentes,
**caractérisé en ce qu'**

- on surveille la portée (Δskupplaus),
- on surveille la première distance (TA) et/ou la seconde distance (sziel),
- on coupe la liaison de coopération entre le moteur à combustion (2) et les roues motrices (10) si la portée (Δskupplaus) est inférieure au second éloignement (sziel).

**11.** Appareil de commande (6), notamment appareil de commande (6) pour commander et/ou réguler un véhicule (F), ce véhicule (F) ayant des roues motrices (10), un moteur à combustion (2) et une transmission (4) qui peut coopérer avec les roues motrices (10) et le moteur à combustion (2), cette transmission ayant au moins un premier rapport qui peut être choisi et le moteur à combustion (2) fonctionnant en mode de coupure de poussée,
**caractérisé en ce que**
l'appareil de commande (6) comporte des moyens pour

- saisir une vitesse (v) du véhicule (F),
- déterminer un objet de destination (Z),
- déterminer une première distance (TA) du véhicule (F) par rapport à l'objet de destination (Z),
- déterminer une seconde distance (sziel) en fonction d'une plage de tolérance (DSZIEL) pour avoir la relation $sziel + DSZIEL \leq TA$,
- déterminer une distance (Δskupplaus) du véhicule (F) dans l'hypothèse que le moteur à combustion (2) ne coopère pas avec les roues motrices (10) et
- déterminer un rapport de transmission (gangi) en fonction de la vitesse (v) saisie du véhicule (F) de façon que le moteur à combustion (2) fonctionne en mode de coupure de poussée.

**12.** Appareil de commande (6) selon la revendication 11,
**caractérisé en ce qu'**
il est programmé pour exécuter le procédé selon l'une des revendications 1 à 10.

**13.** Véhicule (F) comportant des roues motrices (10), un moteur à combustion (2) et une transmission (4) qui peut coopérer avec les roues motrices (10) et le moteur à combustion (2) et ayant au moins un rapport de transmission (gangi) qui peut être sélectionné, le moteur à combustion (2) pouvant fonctionner en mode de coupure de poussée,
**caractérisé en ce que**
le véhicule comporte des moyens (F) pour

- déterminer une vitesse (v) du véhicule (F),
- déterminer un objet de destination (Z),
- déterminer une première distance (TA) du véhicule (F) par rapport à l'objet de destination (Z),
- vérifier l'existence d'une demande de mouvement,
- détecter si le moteur à combustion (2) coopère avec les roues motrices (10),
- déterminer une portée (Δskupplaus) du véhicule (F),
- déterminer un rapport de transmission (gangi) en fonction de la vitesse (v) pour que le moteur à combustion (2) puisse fonctionner en mode de coupure de poussée.

**14.** Véhicule (F) selon la revendication 13,
**caractérisé en ce que**
le véhicule (F) comporte un appareil de commande (6) pour exécuter un procédé selon l'une des revendications 1 à 10.

**15.** Programme d'ordinateur qui s'exécute sur un appareil de calcul ou un appareil de commande (6), notamment sur un microprocesseur (8),
**caractérisé en ce que**
l'appareil de commande (6) effectue un procédé selon l'une des revendications 1 à 10 en faisant tourner le programme d'ordinateur sur l'appareil de commande (6).

**16.** Programme d'ordinateur selon la revendication 15,
**caractérisé en ce qu'**
il est enregistré sur un élément de mémoire (9), notamment dans une mémoire à accès aléatoire (RAM), une mémoire morte (ROM) ou une mémoire flash.

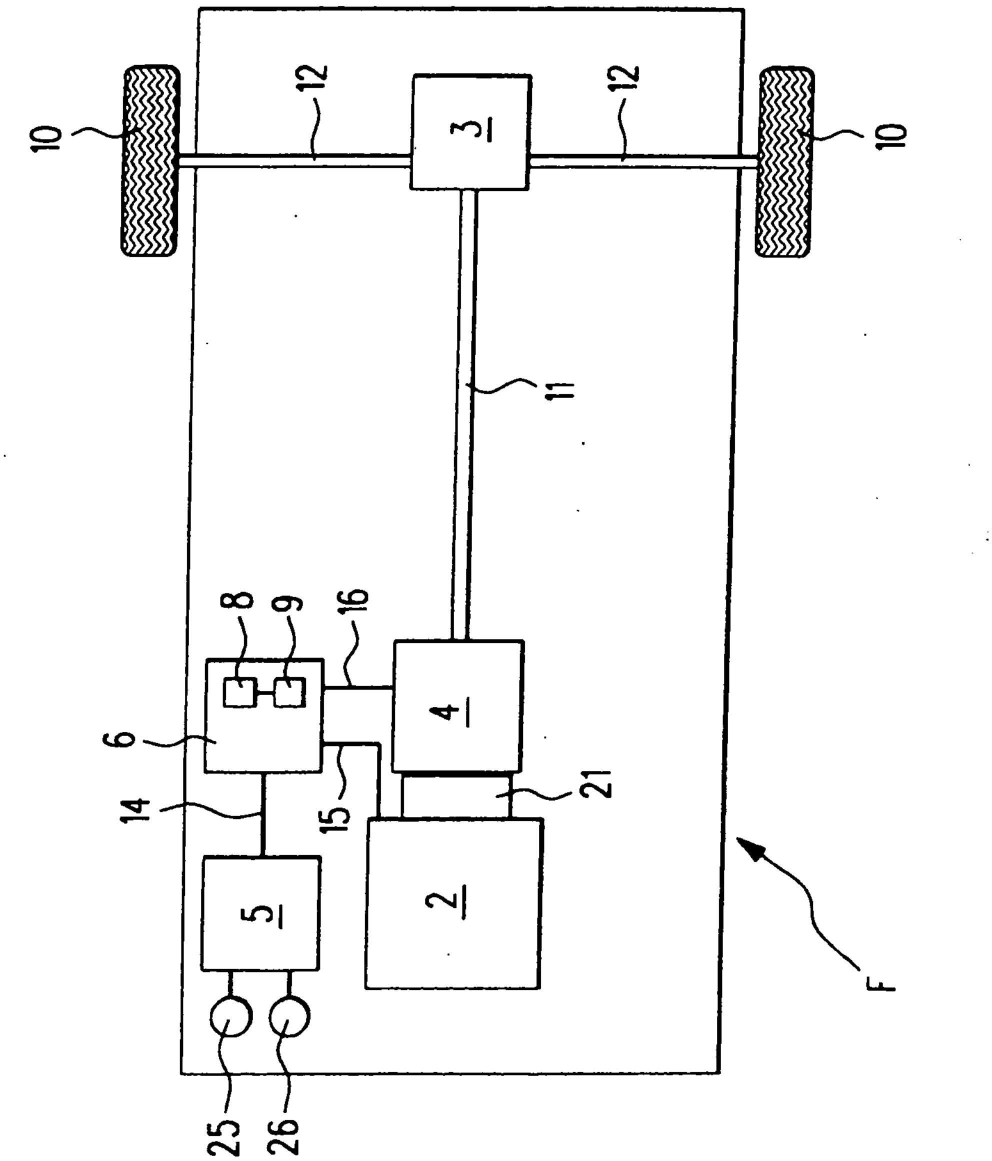


Fig. 1

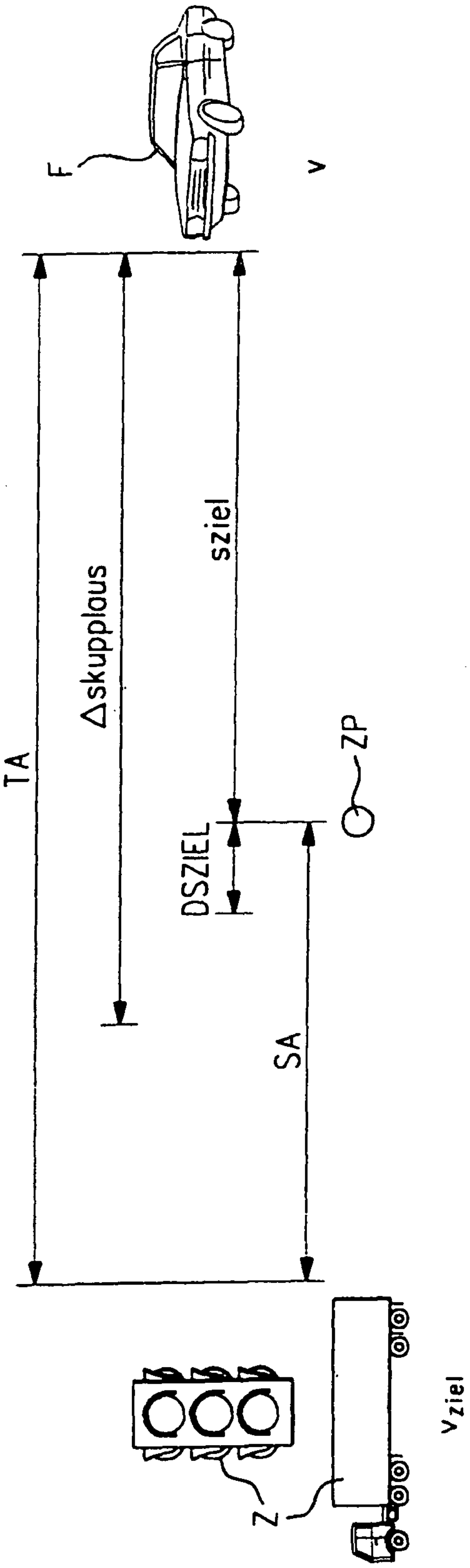


Fig. 2

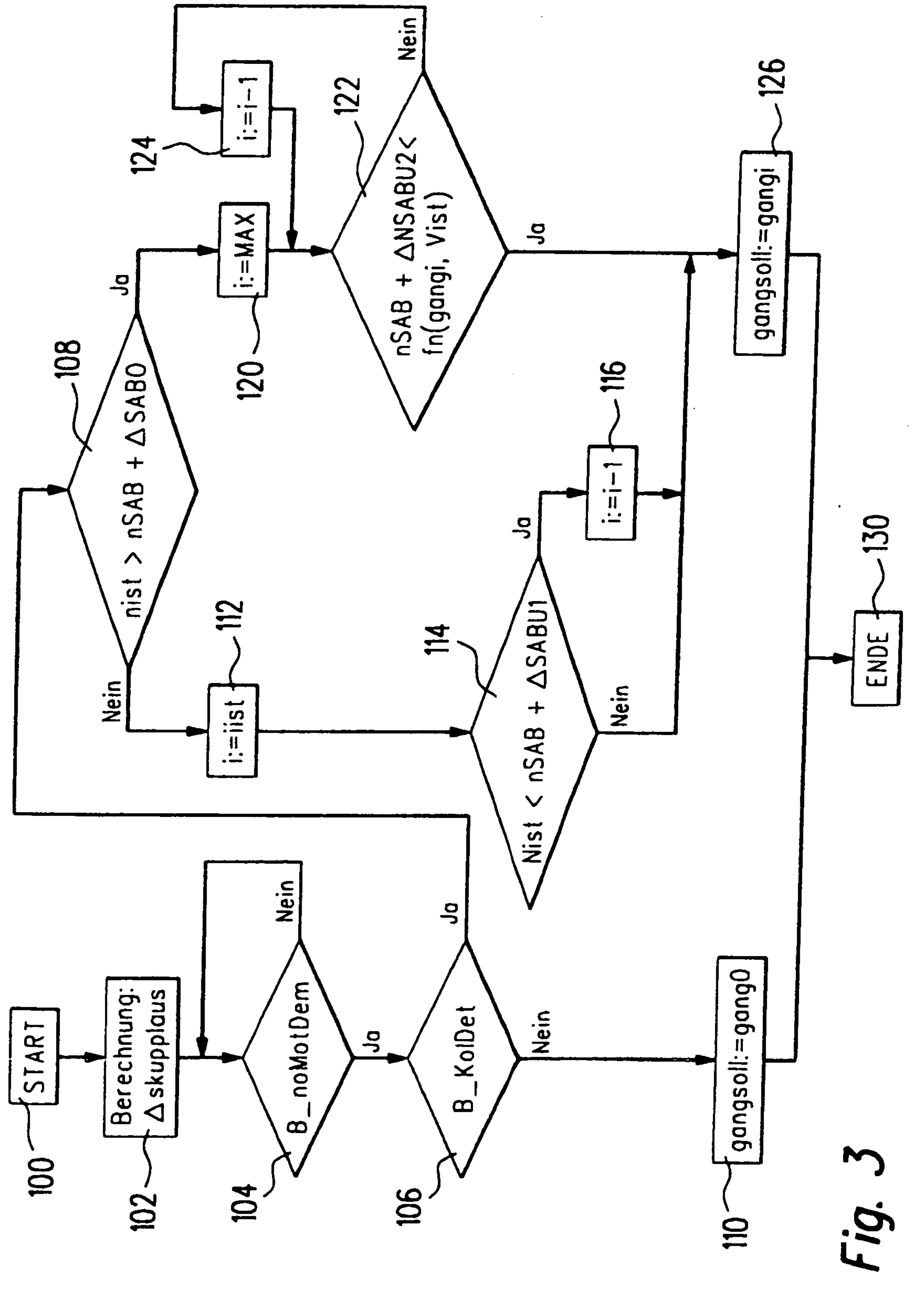
START
100
Berechnung:
Δskupplaus
102
B_noMotDem
104
Nein
Ja
B_KolDet
106
Nein
gangsoll:=gang0
110
nist > nSAB + ΔSABO
108
Ja
Nein
i:=MAX
120
i:=iist
112
nSAB + ΔNSABU2<
fn(gangi, Vist)
122
Nein
Ja
i:=i−1
124
Nist < nSAB + ΔSABU1
114
Ja
Nein
i:=i−1
116
gangsoll:=gangi
126
ENDE
130

Fig. 3

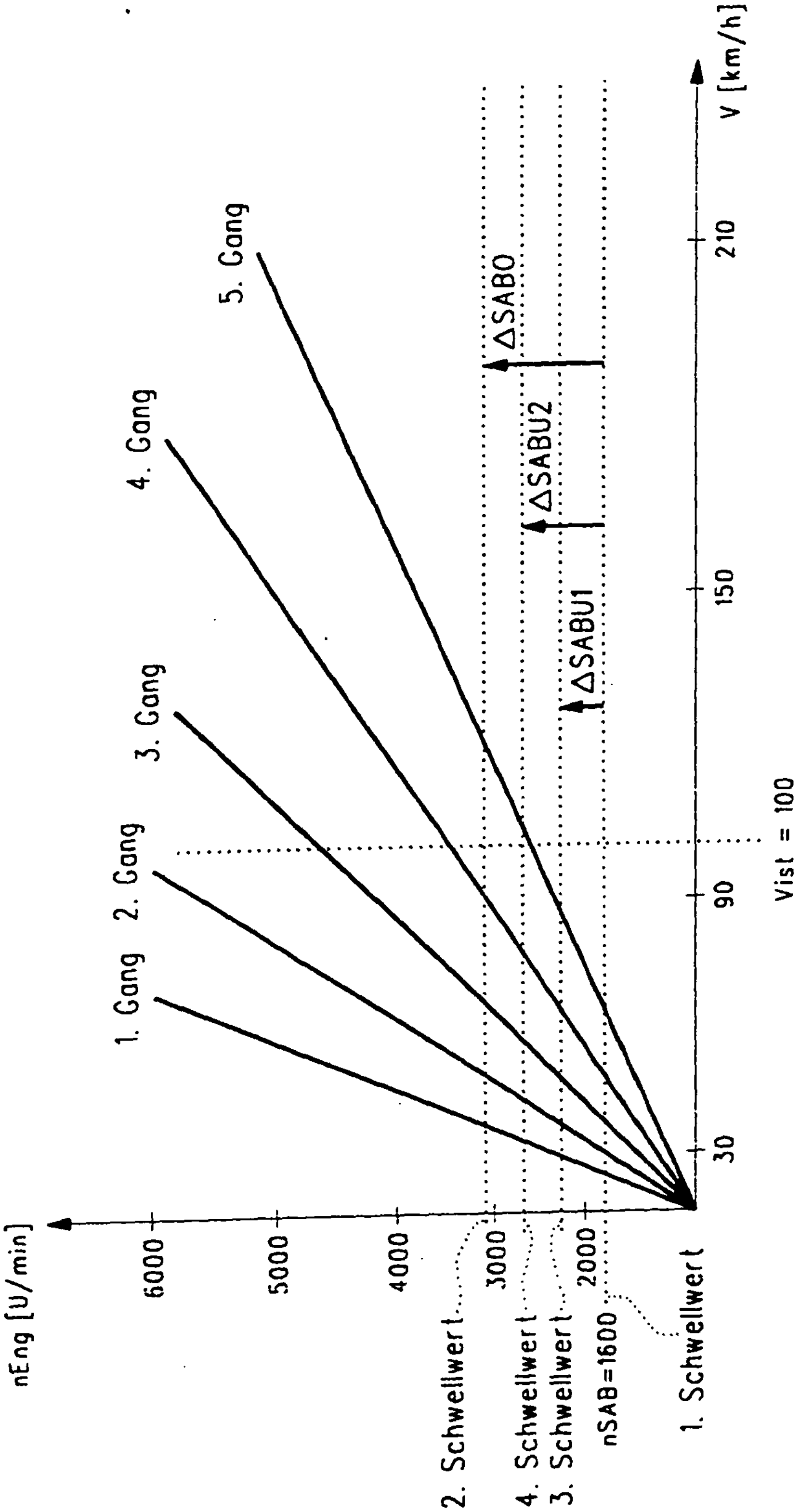
nEng [U/min]
6000
5000
4000
3000
2000
2. Schwellwert
4. Schwellwert
3. Schwellwert
nSAB=1600
1. Schwellwert
1. Gang
2. Gang
3. Gang
4. Gang
5. Gang
ΔSABO
ΔSABU2
ΔSABU1
30
90
150
210
Vist = 100
V [km/h]

Fig. 4

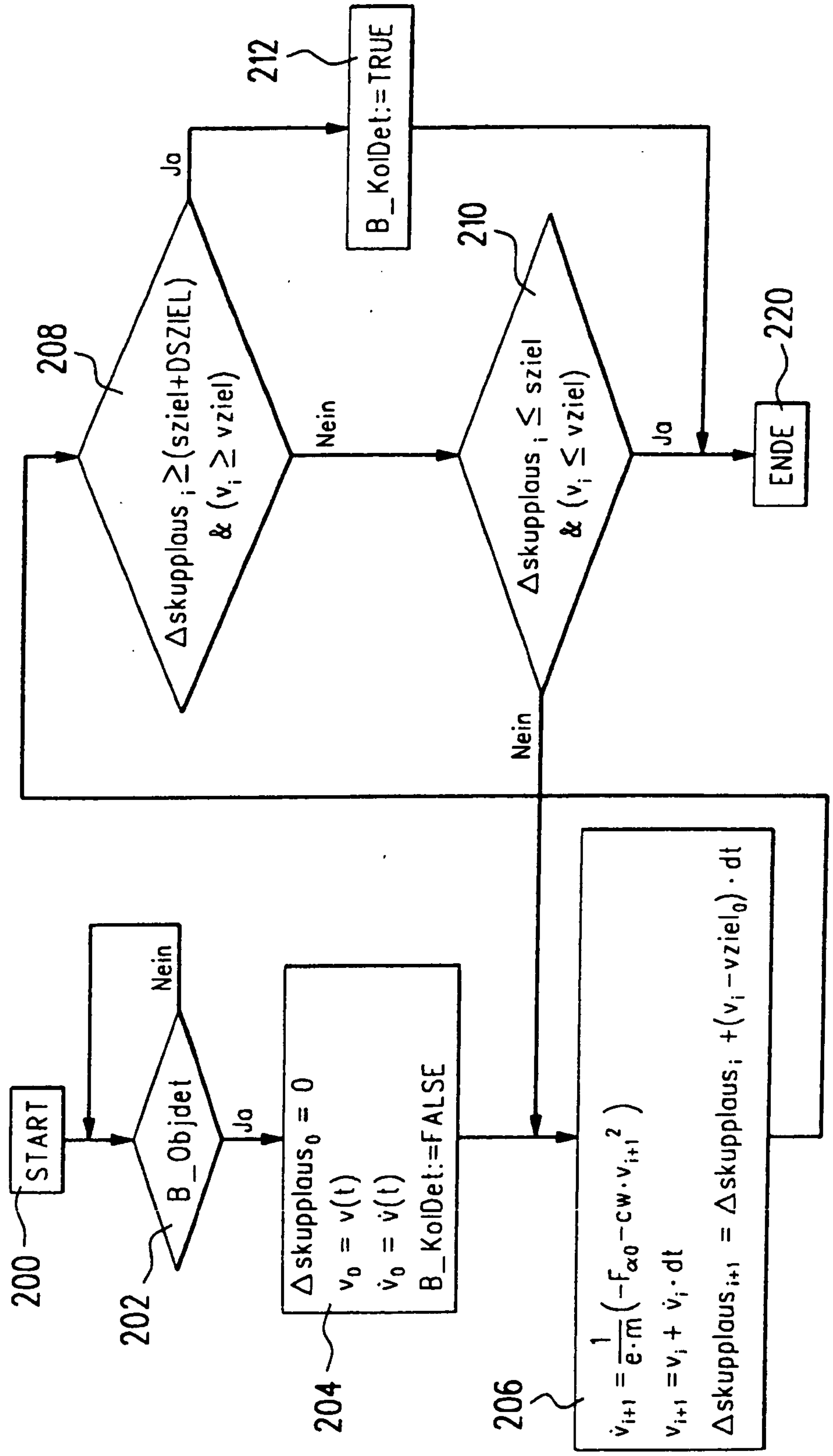
200
START
202
B_Objdet
Nein
Ja
204
Δskupplaus₀ = 0
v₀ = v(t)
v̇₀ = v̇(t)
B_KolDet:=FALSE
206
v̇ᵢ₊₁ = 1/(e·m) (−Fα0 − cw·vᵢ₊₁²)
vᵢ₊₁ = vᵢ + v̇ᵢ·dt
Δskupplausᵢ₊₁ = Δskupplausᵢ + (vᵢ − vziel₀)·dt
208
Δskupplausᵢ ≥ (sziel+DSZIEL) & (vᵢ ≥ vziel)
Ja
Nein
212
B_KolDet:=TRUE
210
Δskupplausᵢ ≤ sziel & (vᵢ ≤ vziel)
Ja
Nein
220
ENDE

Fig. 5